# EUROPÄISCHE PATENTSCHRIFT

(11) **EP 1 274 787 B1**
(45) Veröffentlichungstag und Bekanntmachung des Hinweises auf die Patenterteilung: **23.06.2004**
(21) Anmeldenummer: 01940308.8
(22) Anmeldetag: 09.04.2001
(51) Int. Cl.: C08K 9/08, C09C 1/30, C08K 5/5425, C08L 23/08, C08K 3/22, C09C 3/10

(54) **VERFAHREN ZUR HERSTELLUNG VON FÜLLSTOFFEN MIT VERVESSERTER SCHÜTTDICHTESTABILITÄT UND RIESELFÄHIGKEIT**
METHOD FOR PRODUCING FILLERS HAVING IMPROVED BULK MATERIAL STABILITY AND POURABILITY
PROCEDE DE PRODUCTION DE CHARGES A STABILITE DE MASSE VOLUMIQUE APPARENTE ET A FACULTE D'ECOULEMENT AMELIOREES

(30) Priorität: 10.04.2000 EP 00107713
(43) Veröffentlichungstag der Anmeldung: 15.01.2003
(73) Patentinhaber: Albermarle Corporation, Baton Rouge, LA 70801-1765 (US)
(72) Erfinder: HERBIET, René, B-4700 Eupen (BE); NEUENHAUS, Mario, 50198 Elsdorf (DE)
(74) Vertreter: UEXKÜLL & STOLBERG
(86) Internationale Anmeldenummer: PCT/EP2001/004039
(87) Internationale Veröffentlichungsnummer: WO 2001/077218

(56) Entgegenhaltungen:
- EP-A- 0 077 055
- EP-A- 0 359 362
- EP-A- 0 628 609
- DE-A- 4 417 833
- DATABASE WPI Section Ch, Week 197551 Derwent Publications Ltd., London, GB; Class A97, AN 1975-83897W XP002145671 & JP 50 075230 A (SHOWA DENKO KK), 20. Juni 1975 (1975-06-20)

## Beschreibung

Die Erfindung betrifft ein Verfahren zur Herstellung von feinteiligen Füllstoffen, insbesondere solchen mit flammhemmender Wirkung wie Aluminiumhydroxid oder Magnesiumhydroxid, mit verbesserter Rieselfähigkeit und verbessertem Schüttdichteverhalten, insbesondere nach pneumatischer Förderung durch Rohrleitungen, sowie die nach diesem Verfahren erhältlichen polymerbeschichteten Füllstoffe und deren Verwendung als flammhemmende Füllstoffe in Kunststoff- oder Gummicompounds.

Feinteilig gefällte oder auch gemahlene Füllstoffe weisen häufig eine schlechte Rieselfähigkeit auf. Dies erschwert die Fliessfähigkeit der Produkte, z. B. in Compoundieraggregaten oder bei solchen Förderprozessen, bei denen ein gutes Fliessen des Produktes ein wesentliches Kriterium darstellt (z. B. Siloaustrag, Fliessen im Innenmischer etc.).

Durch Zusatz von handelsüblichen Dispergiermitteln erreicht man zwar eine verbesserte Rieselfähigkeit, die so erhaltenen Produkte besitzen jedoch im Allgemeinen eine für Kabelisolationsanwendungen viel zu hohe elektrische Leitfähigkeit.

Ein weiterer Nachteil dieser Produkte besteht darin, dass nach einem Förderprozess (z. B. durch freien Fall oder mittels Luft durch eine Rohrleitung) die Schüttdichte auf ein sehr niedriges Niveau absinkt. Dadurch verschlechtert sich gleichzeitig das Compoundierverhalten in allen gängigen Mischaggregaten.

Ein weiterer Aspekt ist, dass der Trend im Markt in Richtung Lose-Lieferung geht. Das bedeutet, dass auch nach einem Transportvorgang, beispielsweise vom Silo des Herstellers zum Silofahrzeug und von dort in das Silo des Kunden mit anschliessender Förderung in den Tagesbunker, eine hohe Schüttdichte bei gleichzeitig guter Rieselfähigkeit wünschenswert ist.

Als weitere wichtige Randbedingungen gelten dabei, dass die Eigenschaften der mit diesen Produkten hergestellten Kunststoff- oder Gummicompounds nicht oder nur unwesentlich beeinträchtigt werden dürfen. Hierzu gehören insbesondere:
- die rheologischen Eigenschaften der Compounds
- die mechanischen Eigenschaften der Compounds
- der Flammschutz, sofern es sich um flammhemmende Füllstoffe handelt
- die elektrischen Eigenschaften der Compounds, insbesondere nach Alterung in Wasser
- die Silanankopplung an den Füllstoff, hier vorrangig Amino- und Vinylsilane
- die Freiheit von harten Füllstoff-Agglomeraten

Für die Agglomeratfreiheit gilt hierbei, dass sich zwar Agglomerate im Füllstoff befinden dürfen, diese sich aber während des Compoundiervorganges im Kunststoff vollständig auflösen müssen.

Zusätzlich darf das Additiv nicht zu einer Reduzierung des Durchsatzes bei der Füllstoffproduktion, beispielsweise bei der Sprühtrocknung, führen (z. B. durch Verringerung des Feststoffanteils im Slurry oder durch eine Viskositätserhöhung des Slurrys).

Ferner ist eine erhöhte Feuchteaffinität des beschichteten Produktes auszuschliessen, weil diese z. B. in elektrischen Isoliermaterialien zu Blasenbildung und damit unter anderem zu einer verringerten Durchschlagsfestigkeit führt.

Aufgabe der Erfindung war daher, feinteilige flammhemmende Füllstoffe bereitzustellen, die eine gute Rieselfähigkeit besitzen, auch nach pneumatischer Förderung eine hohe Schüttdichte aufweisen, sich gut in Kunststoffcompounds einarbeiten lassen und deren typische Eigenschaften, insbesondere bei der Anwendung in Kabelcompounds, nicht nachteilig beeinflusst werden.

Erfindungsgemäss wird diese Aufgabe durch das Verfahren nach Patentanspruch 1 gelöst.

Es wurde gefunden, dass durch die Zugabe von 0,1 bis 50 Gew.%, vorzugsweise 0,3 bis weniger als 1 Gew.%, geeigneter Additive zu einer wässrigen Füllstoffsuspension und anschliessende Sprühtrocknung die gewünschten Eigenschaften erzielt werden können. Die Mengenangaben beziehen sich hierbei jeweils auf die Trockensubstanz, also den Füllstoff einerseits und die Polymeren oder Copolymeren andererseits. Unter geeigneten Additiven sind erfindungsgemäss wässrige Polymer- oder Copolymeremulsionen zu verstehen, wobei wenigstens ein thermoplastisches Polymer oder Copolymer oder ein Kautschuk (Latex) oder ein Gemisch mehrerer der genannten polymeren Stoffe vorhanden ist.
Überraschend ist insbesondere, dass zur Erzielung des erfindungsgemässen Effekt bereits Mengen von weniger als 1,0 Gew.% der genannten Polymere ausreichen.

Die Polymerdispersionen enthalten üblicherweise einen Emulgator für die wässrige Phase, wobei anionische, kationische oder auch neutrale Emulgatoren verwendet werden können.

Als Füllstoffe können natürliche oder synthetische Stoffe wie beispielsweise Calciumcarbonat, Dolomit, Bariumsulfat, Talkum, Kaolin, Glimmer, Wollastonit, Siliciumdioxid (Silica, Kieselsäure), Aluminiumoxid, Magnesiumoxid, Aluminiumhydroxid und Magnesiumhydroxid eingesetzt werden.

Als thermoplastische Polymere können beispielsweise Styrol-Copolymere wie z. B. Styrol/Acrylnitril-Copolymere (SAN) oder SAN-Modifikationen wie z. B. Acrylnitril/-Polybutadien/Styrol-Pfropfpolymere, oder Pfropfcopolymere auf Basis von Methylmethacrylat oder Polyacrylate wie z. B. Acrylnitril-Copolymere oder Pfropfcopolymere von Polymethylmethacrylat mit Polybutadien eingesetzt werden. Geeignet sind ferner Copolymere aus Vinylchlorid und Vinylidenchlorid/Acrylnitril.

Bevorzugt sind Polyvinylalkohol (PVOH) sowie Polyvinylacetat (PVA).

Ebenfalls bevorzugt sind polymerisierte Ester oder copolymerisierte Ester der Acrylsäure mit niedrigen Alkoholen, insbesondere solche mit C₁₋₆-Alkoholen wie Methylacrylat, Ethylacrylat oder Butylacrylat. Hierzu zählen beispielsweise auch Ethylen/Ethylacrylat-Copolymere (EEA), Ethylen/Methylacrylat-Copolymere (EMA) und Ethylen/Butylacrylat-Copolymere (EBA).

Ebenfalls bevorzugt werden Polyethylen oder Copolymere des Ethylens eingesetzt. Beispiele sind: Ethylen/Vinylchlorid-Pfropfcopolymere wie Ethylen/Vinylchlorid/Vinylacetat (EVCVA) und Ethylen/Acrylsäure-Copolymere (EAA).

Besonders bevorzugt sind Ethylen/Vinylacetat-Copolymere (EVA) und Ethylen/Vinylalkohol-Copolymere (EVOH).

In einer ebenfalls bevorzugten Ausführungsform enthält die Polymerdispersion wenigstens ein selbstvernetzendes Polymer oder Copolymer.

Die erfindungsgemäss eingesetzten Polymerdispersionen können beispielsweise zusammen mit einem zur Bildung der Füllstoffsuspension notwendigen Dispergiermittel zudosiert werden. Zur Herstellung der Füllstoffsuspension wird z. B. der gemahlene trockene Füllstoff mit Wasser und dem Dispergiermittel verflüssigt oder bei synthetischen (gefällten) Füllstoffen der nach dem Ausfällen und Filtrieren anfallende feuchte Füllstoff eingesetzt.

Die Sprühtrocknung wird vorteilhaft einer Suspension durchgeführt, deren Füllstoffgehalt zwischen 10 und 90 Gew.%, vorzugsweise zwischen 40 und 65 Gew.% liegt. Hierbei können handelsübliche Sprühtrockner eingesetzt werden, wie sie beispielsweise von der Firma Niro erhältlich sind. Als Trocknungsgas wird vorzugsweise Luft eingesetzt, deren Menge und Eintrittstemperatur vorteilhaft so bemessen wird, dass sich eine Austrittstemperatur von 100-150 °C ergibt.

Besonders bevorzugt wird das erfindungsgemässe Verfahren zur Herstellung von Füllstoffen auf Basis von Aluminium- und/oder Magnesiumhydroxiden eingesetzt. Hierbei können sowohl einzelne Hydroxide wie Al(OH)₃, AlOOH und Mg(OH)₂ als auch physikalische Mischungen dieser Hydroxide oder gemischte Hydroxide wie Hydrotalcit oder ähnliche Verbindungen eingesetzt werden.

Ein weiterer besonders bevorzugter Füllstoff ist Calciumcarbonat.

Als Füllstoff wird vorteilhaft ein Produkt mit einer Primärpartikelgrösse (angegeben als *d*₅₀-Wert) von nicht mehr als 15 µm, vorzugsweise nicht mehr als 5 µm, eingesetzt. Das daraus erfindungsgemäss herstellbare rieselfähige und im Schüttdichteverhalten verbesserte, d. h. förderstabile Produkt besitzt eine mittlere Agglomeratgrösse von 1 bis 500 µm, vorzugsweise 20 bis 200 µm, und entsprechend der eingesetzten Menge an Polymerdispersion eine Beschichtung mit 0,1 bis 50 Gew.%, vorzugsweise 0,3 bis weniger als 1 Gew.%, eines Polymeren und/oder Copolymeren.

Die erfindungsgemässen rieselfähigen Füllstoffe werden vorzugsweise in einer Menge von 5 bis 90 Gew.% (bezogen auf das Gesamtgewicht des Compounds) als flammhemmende Füllstoffe in Kunststoff- oder Käutschukcompounds, insbesondere in Kabelmischungen, eingesetzt.

Die nachfolgenden Beispiele mit Aluminiumhydroxid unterschiedlicher Primärpartikelgrösse verdeutlichen die Ausführung der Erfindung, ohne dass darin irgendeine Einschränkung zu sehen ist.

Die in den Beispielen als Ausgangsmaterialien eingesetzten Aluminiumhydroxide wiesen die in der folgenden Tabelle 1 zusammengestellten Eigenschaften auf:

**Tabelle 1**

| **Typ** | **Teilchengrösse (*d***_{**50**}**) [µm]** | **spez. Oberfläche (BET) [m**^{**2**}**/g]** |
|---|---|---|
| OL-104/LE | 1,3-2,3 | 3-5 |
| OL-107/LE | 0,9-1,5 | 6-8 |
| SF4 ESD | 1,96 | 4,5 |

Bei den Typen OL-104/LE und OL-107/LE handelt es sich um Erzeugnisse der alusuisse martinswerk gmbh, Bergheim/Erft, Deutschland. SF4 ESD ist ein Erzeugnis der Firma Alcan. Alle Typen wurden als handelsübliche Ware eingesetzt.

Die Mischungsverhältnisse der Compounds sind in der üblichen Einheit phr angegeben (1 phr = 1 Gewichtsteil auf 100 Gewichtsteile Polymer).

### Beispiel 1

### Einfluss auf die elektrische Leitfähigkeit in Wasser und die Viskosität des Slurrys

Es wurde der Einfluss der erfindungsgemässen Additive auf die elektrische Leitfähigkeit und die Viskosität (Brookfield-Viskosimeter, 100 U/min, Spindel 3) untersucht. Hierzu wurden einem wässrigen Slurry mit 55 Gew.% Aluminiumhydroxid (Typ OL-104/LE) 0,5 Gew.% bzw. 1,0 Gew.% Polymer-Wirksubstanz, bezogen auf Aluminiumhydroxid, zugegeben und anschliessend die Viskosität gemessen. Für eine problemlose Weiterverarbeitung sollte die Viskosität möglichst unter 200 mPa·s liegen.

Die elektrische Leitfähigkeit wurde in der gleichen Suspension gemessen, die zu diesem Zweck mittels destillierten Wassers auf 10% Feststoffgehalt verdünnt wurde. Um gute elektrische Eigenschaften der Produkte zu erhalten, sollte die Leitfähigkeit möglichst unter 150 µS/cm liegen. Die Ergebnisse sind in der folgenden Tabelle 2 zusammengefasst.

**Tabelle 2**

| **Additiv** | **Polymertyp** | **Wirksubstanz** **[%]** | **Leitfähigkeit** **[µS/cm]** | **Viskosität** **[mPa·s]** |
|---|---|---|---|---|
| **1** | Polyvinylalkohol PAF 60¹⁾ | 0,5 | 51 | 58 |
| | | 1,0 | 54 | 58 |
| **2** | Polyvinylalkohol PAF 2¹⁾ | 0,5 | 51 | 58 |
| | | 1,0 | 57 | 56 |
| **3** | Ethylen/Vinylacetat-Copolymer Vinamul® 3242²⁾ | 0,5 | 81 | 47 |
| | | 1,0 | 110 | 47 |
| **4** | selbstvernetzendes Ethylen/Vinylchlorid/ Vinylacetat-Copolymer Vinamul® 3479²⁾ | 0,5 | 93 | 57 |
| | | 1,0 | 124 | 55 |
| **5** | Ethylen/Vinylchlorid/ Vinylacetat/Acrylat-Copolymer Vinamul® 3650²⁾ | 0,5 | 75 | 40 |
| | | 1,0 | 75 | 22 |
| **6** | Polyvinylacetat Vinamul® 9300²⁾ | 0,5 | 76 | 45 |
| | | 1,0 | 86 | 53 |
| **7** | selbstvemetzendes Polyacrylat Vinacryl® 4345²⁾ | 0,5 | 71 | 44 |
| | | 1,0 | 76 | 41 |

| | | | | |
|---|---|---|---|---|
| ¹⁾ Hersteller: Zschimmer & Schwarz, Lahnstein, DE | | | | |
| ²⁾ Hersteller: Vinamul B.V., Geleen, NL Man erkennt, dass die Additive die gewünschten Werte einhalten. | | | | |

### Beispiel 2

### Einfluss auf das Förderverhalten und die Rieselfähigkeit

Es wurden ausgewählte Additive mit einer Suspension von 55 Gew.% Aluminiumhydroxid (OL-104/LE) und einem Wirkstoffgehalt von 0,5 Gew.%, bezogen auf das Aluminiumhydroxid, auf einem Technikumssprühtrockner (Niro Atomizer, Typ "Minor Production") versprüht. Dabei wurde ein Dispergiermittel (z. B. Essigsäure) verwendet und die Additive als wässrige Dispersion mit eingerührt. Der Durchsatz des Sprühtrockners betrug ca. 10 kg/h Feststoff, die Zulufttemperatur ca. 500 °C und die Ablufttemperatur 120-130 °C. Von dem sprühgetrockneten Produkt wurden vor und nach einem Fördervorgang mittels Saugluft (25 m Rohrleitung, Ø = 40 mm, mit 9 Bögen von je 90°) die Schüttdichte in einem Litermass ("Litergewicht") und die Rieselfähigkeit, quantifiziert durch die Rieselzeit, bestimmt. Zur Bestimmung des Litergewichtes wurde ein zylindrischer Messbecher mit einem Durchmesser von 110 mm und einem Volumen von 11 randvoll gefüllt und das Nettogewicht bestimmt. Die Rieselzeit wurde gemessen als Durchflusszeit von 100 g Füllstoff durch einen polierten kegelstumpfförmigen Messingtrichter mit einer Höhe von 115 mm, einem oberen Durchmesser von 145 mm und einem Durchmesser der Ausflussöffnung von 16 mm. Der Trichter wird hierbei durch einen mechanischen Oszillator mit definierter Frequenz und Amplitude in Schwingungen versetzt. Für die folgenden Versuche diente dazu eine Siebmaschine Typ AS 200 control der Fa. Retsch. Die Frequenz war durch die Bauart fest vorgegeben, die Amplitude betrug 1,5 mm. Die Resultate sind in der folgenden Tabelle 3 zusammengefasst. Angegeben ist jeweils das Litergewicht und die Rieselzeit vor und nach dem Fördern im Vergleich zu den unbehandelten Produkten OL-104/LE und SF4 ESD. Die Typen und Hersteller der Additive sind die gleichen wie in Tabelle 2.

**Tabelle 3**

| **Additiv** | **Polymertyp** | **Litergewicht vor Förderung** **[g/l]** | **Litergewicht nach Förderung** **[g/l]** | **Rieselzeit vor Förderung** **[s]** | **Rieselzeit nach Förderung** **[s]** |
|---|---|---|---|---|---|
| ― | ― | 570 | 362 | 11 | 20 |
| ―*) | ― | 515 | 327 | 8 | 14 |
| 1 | Polyvinylalkohol | 624 | 564 | 11 | 9 |
| 2 | Polyvinylalkohol | 640 | 515 | 9 | 10 |
| 3 | Ethylen/Vinylacetat-Copolymer | 543 | 433 | 9 | 13 |
| 4 | selbstvernetzendes Ethylen/Vinylchlorid/Vinylacetat-Copolymer | 650 | 468 | 14 | 10 |
| 5 | Ethylen/Vinylchlorid/Vinylacetat/Acrylat-Copolymer | 500 | 419 | 7 | 9 |
| 6 | Polyvinylacetat | 507 | 416 | 8 | 11 |
| 7 | selbstvemetzendes Acrylat | 613 | 492 | 13 | 8 |

| | | | | | |
|---|---|---|---|---|---|
| *) Aluminiumhydroxid Typ SF4 ESD | | | | | |

Durch den Fördervorgang nimmt das Litergewicht des OL-104/LE von 570 g/l auf 362 g/l und des SF4 ESD von 515 g/l auf 327 g/l ab, d.h. um jeweils etwa 36%.
Deutlich ist auch die Zunahme, d. h. die Verschlechterung der Rieselzeit beim OL-104/LE von 11 s auf 20 s. Das Produkt SF4 ESD weist zwar absolut gesehen geringere Rieselzeiten auf, der relative Anstieg nach der Förderung ist jedoch etwa gleich. Dagegen zeigen die erfindungsgemässen Produkte gleichzeitig ein verbessertes Rieselverhalten und eine deutlich geringere Abnahme des Litergewichtes durch das Fördern. Die geringste Abnahme (ca. -10%) ergab sich mit dem Additiv 1, die höchste (ca. -28%) mit Additiv 4, in jedem Falle war sie aber deutlich geringer als bei den nicht erfindungsgemässen Referenzprodukten. Bei den erfindungsgemässen Produkten wurde sogar eine Abnahme der Rieselzeit nach dem Fördervorgang mit den Additiven 1, 4 und 7 beobachtet. Diese Fliessverbesserung durch den Fördervorgang erscheint paradox, lässt sich aber durch eine Reduzierung des "Klebeeffektes" durch das Polymere während des Förderns erklären.

### Beispiel 3

### Einfluss auf das Förderverhalten und die Rieselfähigkeit

Es wurde verfahren wie in Beispiel 2 beschrieben, jedoch wurde an Stelle von Aluminiumhydroxid OL-104/LE die feinteiligere Qualität OL-107/LE als Füllstoff-Ausgangsmaterial eingesetzt. Als Additive wurden neben den zwei Polyvinylalkohol-Typen aus den Beispielen 1 und 2 vier selbstvernetzende Polyacrylate der Firma Vinamul eingesetzt. Die Ergebnisse sind in der folgenden Tabelle 4 zusammengefasst.

**Tabelle 4**

| **Additiv** | **Polymertyp** | **Litergewicht vor Förderung** **[g/l]** | **Litergewicht nach Förderung** **[g/l]** | **Rieselzeit vor Förderung** **[s]** | **Rieselzeit nach Förderung** **[s]** |
|---|---|---|---|---|---|
| ― | ― | 389 | 282 | 13 | 23 |
| **1** | Polyvinylalkohol PAF 60 | 489 | 473 | 9 | 10 |
| **2** | Polyvinylalkohol PAF 2 | 498 | 460 | 9 | 12 |
| **7** | selbstvernetzendes Acrylat Vinacryl® 4345 | 445 | 426 | 10 | 9 |
| **8** | selbstvernetzendes Acrylat Vinacryl® 4343 | 495 | 408 | 15 | 9 |
| **9** | selbstvernetzendes Acrylat Vinacryl® 4344 | 460 | 443 | 9 | 9 |
| **10** | selbstvernetzendes Acrylat Vinacryl® 4373 | 334 | 306 | 8 | 13 |

### Beispiel 4

### Einfluss auf die physikalischen Eigenschaften von Compounds ohne und mit Silan

Um den Einfluss der erfindungsgemässen Beschichtung auf die rheologischen, mechanischen und elektrischen Eigenschaften, den Flammschutz und die Silanankopplung zu untersuchen, wurden die 4 Additive Nr. 1, Nr. 2, Nr. 4 und Nr. 7 für weitere Versuche ausgewählt. Bestimmt wurden Melt Flow Index (MFI) nach DIN-ISO 1133, Zugfestigkeit σ_{B} und Reissdehnung ε_{B} nach DIN 53504 und EN ISO 527, spezifischer Widerstandp nach Lagerung in Wasser für 7 d bei 70 °C bzw. 28 d bei 50 °C nach DIN 53482/VDE 0303 Teil 3 und Limiting Oxygen Index (LOI) nach ASTM D 2863. Die Tabellen 5 und 6 zeigen die Ergebnisse im Vergleich zum unbeschichteten OL-104/LE und SF4 ESD in einem EVA-Compound mit 19% Vinylacetat-Anteil (Polymer=100 phr), 150 phr Füllstoffmenge, 1,5 phr (3-Aminopropyl)triethoxysilan, das während des Compoundiervorganges auf einem Walzwerk zugegeben wurde, und 0,75 phr Irganox® 1010.

**Tabelle 5**

| (ohne Silan) | | | | | | |
|---|---|---|---|---|---|---|
| **Additiv** | **MFI (190 °C/10 kg)** **[g/10 min]** | **σ**_{**B**} **[MPa]** | **ε**_{**B**} **[%]** | **p 7 d/70 °C** **[Ω·cm]** | **p 28 d/50 °C** **[Ω·cm]** | **LOI (50×2 mm**^{**2**}**)** **[% O**_{**2**}**]** |
| ― | 1,24 | 8,8 | 119 | 2,9·10⁸ | 2,2·10⁸ | 38 |
| ―*) | 1,41 | 9,2 | 114 | ― | 5,2·10⁷ | 38 |
| **1** | 1,72 | 7,8 | 140 | 5,3·10⁹ | 1,9·10⁸ | 37,6 |
| **2** | 1,92 | 8,5 | 135 | 4,0·10⁹ | 9,4·10⁷ | 37,8 |
| **4** | 1,52 | 8,7 | 147 | 3,5·10⁹ | 9,0·10⁸ | 37,4 |
| **7** | 1,52 | 9,3 | 170 | 4,6·10⁸ | 1,3·10⁹ | 37,4 |

| | | | | | | |
|---|---|---|---|---|---|---|
| *) Aluminiumhydroxid Typ SF4 ESD | | | | | | |

**Tabelle 6**

| (mit Silan) | | | | |
|---|---|---|---|---|
| **Additiv** | **MFI (190 °C/10 kg)** **[g/10 min]** | **σ**_{**B**} **[MPa]** | **ε**_{**B**} **[%]** | **ρ 28 d/50 °C** **[Ω·cm]** |
| ― | 0,9 | 11,6 | 205 | 1,9·10¹⁴ |
| ―*) | 1,1 | 11,6 | 197 | 2,9·10¹⁴ |
| 1 | 1,4 | 11,6 | 197 | 1,8·10¹³ |
| 2 | 1,5 | 11,6 | 202 | 1,8·10¹⁴ |
| 4 | 1,3 | 11,4 | 208 | 1,5·10¹³ |
| 7 | 1,2 | 11,5 | 210 | 3,5·10¹⁴ |

| | | | | |
|---|---|---|---|---|
| *) Aluminiumhydroxid Typ SF4 ESD | | | | |

Tabelle 5 zeigt, dass der Schmelzindex (MFI) durch das erfindungsgemässe Verfahren leicht verbessert wird. Ohne Aminosilan wird die Zugfestigkeit mit Ausnahme von Additiv Nr. 1 nicht signifikant verändert. Die Reissdehnung verbessert sich hingegen signifikant. Die elektrischen Eigenschaften nach 7 d/70 °C bzw. 28 d/50 °C sind gleich wie oder sogar besser als bei unbehandeltem OL-104/LE und stets besser als bei dem Vergleichsprodukt SF4 ESD.

Auch Tabelle 6 zeigt, dass der MFI im Vergleich zu OL-104/LE und SF4 ESD leicht verbessert wird. Die beobachteten mechanischen Eigenschaften belegen, dass die Silanankopplung offensichtlich nicht beeinträchtigt wird. Auch nach der Wasseralterung erhält man sehr hohe spezifische Widerstandswerte von 10¹³ bis 10¹⁴ Ω·cm.

### Beispiel 5

### Einfluss auf die mechanischen Compoundeigenschaften in einer vernetzbaren EVA-Rezeptur mit Vinylsilan

Es wurden Compounds gemäss folgender Rezeptur hergestellt:
100 phr EVA (Vinylacetat-Anteil 19%)
150 phr Aluminiumhydroxid
1,5 phr Vinyltrimethoxysilan
2,5 phr Peroxid Perkadox® 14 /40
0,75 phr Irganox® 1010.
Als Aluminiumhydroxid wurde unbehandeltes bzw. erfindungsgemäss nach Beispiel 2 behandeltes Aluminiumhydroxid OL-107/LE eingesetzt. Das Vinylsilan wurde während der Compoundierung auf dem Walzwerk zugegeben. Die Compounds wurden während 20 min bei 175 °C vemetzt. Anschliessend wurden Zugfestigkeit σ_{B} und Reissdehnung ε_{B} bestimmt. Die Ergebnisse sind in der folgenden Tabelle 7 zusammengefasst.

**Tabelle 7**

| **Additiv** | **σ**_{**B**} **[MPa]** | **ε**_{**B**} **[%]** |
|---|---|---|
| ― | 18,3 | 193 |
| **1** | 18,1 | 163 |
| **2** | 18,5 | 178 |
| **7** | 19,4 | 198 |
| 8 | 17,9 | 207 |

Gemäss Tabelle 7 ergeben sich in den gemessenen Werten nur geringe Unterschiede zum unbeschichteten Produkt, die entweder im Bereich der Messwertstreuung liegen oder durch Anpassung der Silan/Peroxidmenge optimiert werden können.

## Patentansprüche

1. Verfahren zur Herstellung von oberflächenmodifizierten Füllstoffen mit verbesserter Schüttdichtestabilität und verbesserter Rieselfähigkeit mit einer mittleren Agglomeratgrösse von 1 bis 500 µm, **dadurch gekennzeichnet, dass** eine wässrige Suspension von Füllstoff mit einer Primärpartikelgrösse im *d*₅₀-Wert von nicht mehr als 15 µm mit Zusatz von 0,1 bis 50 Gew.% (gerechnet als Trockensubstanz) einer wässrigen Polymerdispersion sprühgetrocknet wird, wobei die wässrigen Polymerdispersion aus wenigstens einem thermoplastischen Polymer oder Copolymer und/oder einem Kautschuk sowie gegebenenfalls wenigstens einem selbstvernetzenden Polymer oder Copolymer, Dispergiermittel und Wasser besteht.

2. Verfahren nach Anspruch 1, **dadurch gekennzeichnet, dass** die Polymerdispersion in einer Menge (gerechnet als Trockensubstanz) von 0,3 bis weniger als 1,0 Gew.% zugesetzt wird.

3. Verfahren nach Anspruch 1 oder 2, **dadurch gekennzeichnet, dass** die Polymerdispersion Polyvinylalkohol enthält.

4. Verfahren nach einem der Ansprüche 1 bis 3, **dadurch gekennzeichnet, dass** die Polymerdispersion Polyvinylacetat enthält.

5. Verfahren nach einem der Ansprüche 1 bis 4, **dadurch gekennzeichnet, dass** die Polymerdispersion wenigstens einen polymerisierten oder copolymerisierten Ester der Acrylsäure mit niedrigen Alkoholen, insbesondere C₁₋₆-Alkoholen, wie beispielsweise Butylacrylat enthält.

6. Verfahren nach einem der Ansprüche 1 bis 5, **dadurch gekennzeichnet, dass** die Polymerdispersion Polyethylen oder ein Copolymer des Ethylens enthält.

7. Verfahren nach Anspruch 6, **dadurch gekennzeichnet, dass** die Polymerdispersion ein Ethylen/vinylacetat-Copolymer enthält.

8. Verfahren nach Anspruch 6 oder 7, **dadurch gekennzeichnet, dass** die Polymerdispersion ein Ethylen/Vinylalkohol-Copolymer enthält.

9. Verfahren nach einem der Ansprüche 1 bis 8, **dadurch gekennzeichnet, dass** die Polymerdispersion wenigstens ein selbstvernetzendes Polymer oder Copolymer enthält.

10. Verfahren nach einem der Ansprüche 1 bis 9, **dadurch gekennzeichnet, dass** die Sprühtrocknung mit einem Füllstoffgehalt von 10 bis 90 Gew.%, vorzugsweise 40 bis 65 Gew.% durchgeführt wird.

11. Verfahren nach einem der Ansprüche 1 bis 10, **dadurch gekennzeichnet, dass** als Füllstoff ein oder mehrere Hydroxide des Aluminiums und/oder des Magnesiums eingesetzt werden.

12. Verfahren nach einem der Ansprüche 1 bis 10, **dadurch gekennzeichnet, dass** als Füllstoff Calciumcarbonat eingesetzt wird.

13. Rieselfähige Füllstoffe mit einer Primärpartikelgrösse im *d*₅₀-Wert von nicht mehr als 15 µm, vorzugsweise nicht mehr als 5 µm, einer mittleren Agglomeratgrösse von 1 bis 500 µm, vorzugsweise 20 bis 200 µm, und einer Beschichtung mit 0,1 bis 50 Gew.% von Polymeren oder Copolymeren, die aus wenigstens einem thermoplastischen Polymer oder Copolymer und/oder einem Kautschuk sowie gegebenenfalls wenigstens einem selbstvernetzenden Polymer oder Copolymer, Dispergiermittel und Wasser besteht, erhältlich durch das Verfahren gemäss Ansprüchen 1 bis 12.

14. Rieselfähige Füllstoffe nach Anspruch 13, **dadurch gekennzeichnet, dass** sie eine Beschichtung mit 0,3 bis weniger als 1,0 Gew.% der Polymeren oder Copolymeren tragen.

15. verwendung der rieselfähigen Füllstoffe gemäss Anspruch 13 oder 14 als flammhemmende Füllstoffe in einer Menge von 5 Gew.% bis 90 Gew.% in Kunststoff- oder Gummicompounds, insbesondere in Mischungen für Rabelisolierungen.

## Claims

1. Process for the preparation of surface modified fillers with improved bulk density stability, improved free-flowability and an average agglomerate size of 1 to 500µ, **characterised in that** an aqueous suspension of filler, whose primary particle size d₅₀ value is not more than 15µ and to which has been added 0.1 to 50 wt.% (calculated as dry substance) of an aqueous polymer dispersion, is spray-dried, wherein the aqueous polymer dispersion consists of at least one thermoplastic polymer or copolymer and/or a rubber and optionally at least one self-crosslinkable polymer or copolymer, dispersing agent and water.

2. Process according to Claim 1 **characterised in that** the polymer dispersion is added in a quantity (calculated as dry substance) of 0.3 to less than 1.0 wt.%.

3. Process according to Claim 1 or 2, **characterised in that** the polymer dispersion comprises polyvinyl alcohol.

4. Process according to any one of Claims 1 to 3, **characterised in that** the polymer dispersion comprises polyvinyl acetate.

5. Process according to any one of Claims 1 to 4, **characterised in that** the polymer dispersion comprises at least one polymerised or copolymerised ester of acrylic acid with short chain alcohols, in particular C₁₋₆ alcohols, such as, for example, butyl acrylate.

6. Process according to any of Claims 1 to 5, **characterised in that** the polymer dispersion comprises polyethylene or a copolymer of ethylene.

7. Process according to Claim 6, **characterised in that** the polymer dispersion comprises an ethylene vinyl acetate copolymer.

8. Process according to Claim 6 or 7, **characterised in that** the polymer dispersion comprises an ethylene vinyl alcohol copolymer.

9. Process according to any one of Claims 1 to 8, **characterised in that** the polymer dispersion comprises at least one self-crosslinkable polymer or copolymer.

10. Process according to any one of Claims 1 to 9, **characterised in that** the spray-drying is carried out with a filler content of 10 to 90 wt.%, preferably 40 to 65 wt.%.

11. Process according to any one of Claims 1 to 10, **characterised in that** one or more hydroxides of aluminium and/or magnesium are used as filler.

12. Process according to any one of Claims 1 to 10, **characterised in that** calcium carbonate is used as filler.

13. Free-flowing fillers with a primary particle size whose d₅₀ value is not more than 15µ, preferably not more than 5µ, an average agglomerate size of 1 to 500µ, preferably 20 to 200µ, and a coating with 0.1 to 50 wt.% of polymer or copolymer, which consists at least of one thermoplastic polymer or copolymer and/or a rubber, and optionally at least one self-crosslinkable polymer or copolymer, dispersing agent and water, obtainable by the process according to Claims 1 to 12.

14. Free-flowing fillers according to Claim 13 **characterised in that** they carry a coating of 0.3 to less than 1.0 wt.% of polymer or copolymer.

15. Use of free-flowing fillers according to Claim 13 or 14 as flame retardant fillers in a quantity of 5 to 90 wt.% in plastic or rubber compounds, in particular in compounds for cable insulations.

## Revendications

1. Procédé pour fabriquer des charges modifiées en surface possédant une stabilité améliorée de densité apparente une capacité d'écoulement améliorée avec une taille moyenne d'agglomérats de 1 à 500 µm, **caractérisé en ce qu'**on sèche par pulvérisation une suspension aqueuse de charge ayant une taille de particules primaire de valeur d₅₀ non supérieure à 15 µm avec addition de 0,1 à 50 % en poids (calculé en tant que substance sèche) d'une dispersion aqueuse de polymère, la dispersion aqueuse de polymère étant constituée par au moins un polymère ou un copolymère thermoplastique et/ou un caoutchouc ainsi que, éventuellement, au moins un polymère ou copolymère autoréticulant, un agent de dispersion et de l'eau.

2. Procédé selon la revendication 1, **caractérisé en ce que** la dispersion de polymère est ajoutée en une quantité (calculée en tant que substance sèche) de 0,3 à moins de 1,0 % en poids.

3. Procédé selon la revendication 1 ou 2, **caractérisé en ce que** la dispersion de polymère contient un alcool polyvinylique.

4. Procédé selon l'une des revendications 1 à 3, **caractérisé en ce que** la dispersion polymère contient de l'acétate de polyvinyle.

5. Procédé selon l'une des revendications 1 à 4, **caractérisé en ce que** la dispersion polymère contient au moins un ester polymérisé ou copolymérisé de l'acide acrylique avec des alcools faibles, notamment des alcools C₃₋₆, comme par exemple de l'acrylate de butyle.

6. Procédé selon l'une des revendications 1 à 5, **caractérisé en ce que** la dispersion polymère contient du polyéthylène ou un copolymère de l'éthylène.

7. Procédé selon la revendication 6, **caractérisé en ce que** la dispersion polymère contient un copolymère éthylène-acétate de vinyle.

8. Procédé selon la revendication 6 ou 7, **caractérisé en ce que** la dispersion polymère contient un copolymère éthylène-alcool vinylique.

9. Procédé selon l'une des revendications 1 à 8, **caractérisé en ce que** la dispersion polymère contient un polymère ou un copolymère autoréticulant.

10. Procédé selon l'une des revendications 1 à 9, **caractérisé en ce que** le séchage par pulvérisation est exécuté avec une teneur en charge de 10 à 90 % en poids, de préférence de 40 à 65 % en poids.

11. Procédé selon l'une des revendications 1 à 10, **caractérisé en ce qu'**on utilise comme charge un ou plusieurs hydroxydes de l'aluminium et/ou du magnésium.

12. Procédé selon l'une des revendications 1 à 10, **caractérisé en ce qu'**on utilise comme charge du carbonate de calcium.

13. Charges aptes à s'écouler possédant une taille primaire de particules de valeur d₅₀ non supérieure à 15 µm, de préférence non supérieure à 5 µm, une taille moyenne d'agglomérats de 1 à 500 µm et de préférence de 20 à 200 µm, et un revêtement de 0,1 à 50 % en poids de polymère ou de copolymère, qui sont constituées par au moins un polymère ou un copolymère thermoplastique et/ou un caoutchouc ainsi que, éventuellement, au moins un polymère ou un copolymère autoréticulant, un agent de dispersion et de l'eau, susceptibles d'être obtenues par le procédé selon des revendications 1 à 12.

14. Charges aptes à s'écouler selon la revendication 13, **caractérisées en ce qu'**elles portent un revêtement de 0,3 à moins de 1,0 % en poids des polymères ou des copolymères.

15. Utilisation des charges aptes à s'écouler selon la revendication 13 ou 14, en tant que substance de remplissage résistant à la flamme, en une quantité de 5 % en poids à 90 % en poids dans des compounds de polymères ou de caoutchouc, en particulier dans des mélanges pour isolants de câbles.
